**Europäisches Patentamt**

**European Patent Office**

**Office européen des brevets**

(19)

(11) Veröffentlichungsnummer: **0 256 386**
**B1**

(12) **EUROPÄISCHE PATENTSCHRIFT**

(45) Veröffentlichungstag der Patentschrift:
**27.12.90**

(51) Int. Cl.⁵: **A41H 3/00**

(21) Anmeldenummer: **87111031.8**

(22) Anmeldetag: **30.07.87**

(54) Verfahren und Vorrichtung zur Optimierung eines Materialzuschnitts.

(30) Priorität: **06.08.86 DE 3627110**

(43) Veröffentlichungstag der Anmeldung:
**24.02.88 Patentblatt 88/8**

(45) Bekanntmachung des Hinweises auf die Patenterteilung:
**27.12.90 Patentblatt 90/52**

(84) Benannte Vertragsstaaten:
**AT BE CH ES FR GB IT LI NL SE**

(56) Entgegenhaltungen:
**DE-A- 2 735 019**
**FR-A- 2 564 708**
**GB-A- 1 431 964**
**GB-A- 2 143 423**

(73) Patentinhaber: **Dürkopp Systemtechnik GmbH,**
**August-Bebel-Str. 133 - 135, D-4800 Bielefeld 1(DE)**

(72) Erfinder: **Bruder, Wolfgang, Heidsiekstrasse 16,**
**D-4800 Bielfeld 1(DE)**
Erfinder: **Biervert, Klaus, Odenwälder Strasse 9,**
**D-4905 Spenge(DE)**

(74) Vertreter: **Rehmann, Klaus-Thorsten, Dipl.-Ing., c/o**
**Dürkopp Adler AG, Postfach 6, D-4800 Bielefeld 1(DE)**

**Beschreibung**

Die Erfindung betrifft ein Verfahren und eine Vorrichtung zur Optimierung eines Materialzuschnitts.

Es sind die unterschiedlichsten Verfahren für einen Materialzuschnitt bekannt. Beispielsweise wird beim Zuschneiden von Tierhäuten so verfahren, daß auf die auf dem Zuschneidetisch ausgebreitete Tierhaut entsprechend dem gewünschten Zuschnitt vorbereitete Schablonen aufgelegt und unter Berücksichtigung aller Fehlerstellen und Strukturgegebenheiten manuell ausgerichtet werden. Anschließend werden die Schablonenkonturen auf dem Leder nachgezeichnet und ausgeschnitten, oder der Zuschnitt erfolgt direkt mittels eines entlang der Schablonen geführten Handmessers.

Ein solches Verfahren ist äußerst zeitaufwendig, insbesondere weil kleinere Schablonen in der Mitte einer Tierhaut - die Abmessungen von 3 Meter x 3 Meter erreicht - aus ergonomischen Gründen nur sehr schlecht zu positionieren sind. Außerdem kann der Ausnutzungsgrad, das heißt das Verhältnis von Zuschnittsfläche zu Fläche zur Tierhaut nur subjektiv erkannt werden und ist damit stark abhängig von der Erfahrung des mit dem Zuschnitt betrauten Personals.

Auf dieselbe Art und Weise können auch Stoffgewebe oder andere biegeschlaffe Materialien zugeschnitten werden. Sofern es sich um gemusterten Stoff handelt wird der Zuschnitt weiter dadurch erschwert, daß die aufgelegte Schablone die jeweilige Musterung verdeckt und eine Ausrichtung im Hinblick auf die Übergänge am späteren Fertigteil recht kompliziert ist. Gerade in diesem Fall ist der Ausnutzungsgrad recht niedrig, weil ein mehrmaliges Ausrichten und Nachzeichnen der Schablonen aus Kostengründen nicht durchgeführt wird.

Beim Zuschnitt von nicht flächenhaftem Material ist bereits die Herstellung dreidimensionaler Schablonen äußerst zeit- und kostenaufwendig. Wenn das zu schneidende Gut außerdem eine unregelmäßige räumliche Ausdehnung aufweist, ist eine Variation beim Auflegen der Schablonen nahezu unmöglich. Eine Verbesserung des Ausnutzungsgrades ist nur durch die Herstellung neuer Schablonen oder durch freihändiges Aufzeichnen der Konturen möglich.

Die FR-A 12 564 708 offenbart ein interaktives Auslegeverfahren von Profilen auf einem Arbeitstisch. Dabei sind in einem Rechner die Koordinaten diverser Schablonen gespeichert, die auf einem Monitor angezeigt werden können. Über eine Videoprojektionseinrichtung können diese Schablonen auf das auf dem Arbeitstisch aufliegende Schneidegut projiziert und über eine mit dem Rechner verbundene Steuereinrichtung auf dem Monitor bewegt werden. Wenn die gewünschte Lage erreicht ist, wird diese im Rechner gespreichert und der automatische Zuschnitt kann erfolgen.

Mittels des hier offenbarten Verfahrens sind nur kleinere Muster ausschneidbar, deren Größe durch die Abmessungen des Bildschirms begrenzt sind, da durch die Zeilenauflösung des Videoprojektors eine Bildvergrößerung zu Unschärfen führt, was zur Folge hat, daß das Bedienpersonal die projizierten Konturen nicht mehr erkennen kann. Fener ist der Ausnutzungsgrad nur subjektiv bestimmbar.

Ebenso ist bekannt, den Zuschnitt von Leder mit Hilfe von Stanzeisen vorzunehmen. Dabei haben die messerscharfen Stanzeisen die Kontur der auszuschneidenden Teile und nach dem Auflegen und Positionieren werden durch Krafteinleitung auf die Stanzeisen entsprechende Teile aus der Tierhaut gestanzt.

Auch hier ist das Ausrichten problembehaftet. Neben dem Gewicht des Stanzeisens, das deren Handhabung erschwert, sind Beschädigungen des Leders durch die scharfen Schneiden nicht auszuschließen. Der Ausnutzungsgrad kann auch bei diesem Verfahren nur subjektiv ermittelt werden.

Der Erfindung liegt die Aufgabe zu Grunde ein Verfahren zu schaffen, das einen Materialzuschnitt vereinfacht, dabei schnell und mit hoher Genauigkeit ausführbar ist und das es gestattet, objektiv den Ausnutzungsgrad zu bestimmen.

Die Lösung der Aufgabe ist dem kennzeichnenden Teil der Ansprüche 1 oder 3 entnehmbar. Eine andere Ausgestaltung des Verfahrens nach Anspruch 1 gibt Anspruch 2 wieder.

Vorteilhaft an dem Verfahren nach Anspruch 1 und/oder 2 stellt sich dar, daß die Positionierung der Schablonen von einem Ort aus erfolgen kann, der den Gesamtüberblick über das zu schneidene Gut gewährleistet, so daß vom Bedienpersonal dessen Fehlerstellen und Strukturgegebenheiten erfaßt werden können.

Weiterhin kann die Anzahl der aufzulegenden Schablonen problemlos so lange variiert werden, bis sich der optimale Ausnutzungsgrad ergibt. Dieser kann außerdem gegen das subjektive Empfinden der geeigneten Strukturauswahl abgewogen werden, das heißt, die Materialkosten können objektiv ins Verhältnis zur Qualität des Zuschnitts gesetzt werden.

Darüber hinaus entfällt bei dem Verfahren nach Anspruch 3 die Herstellung einzelner Schablonen.

Außerdem können nach diesen Verfahren auch gemusterte Stoffe optimal ausgeschnitten werden, weil die Musterung während der Auslage der Schablone erkennbar bleibt und so ausgewählt werden kann, daß beim Fertigteil - beispielsweise einem Kleidungsstück - ein einheitlicher Übergang zwischen den verschiedenen Einzelteilen gesichert ist. Ebenso ist es möglich Konturen aus dreidimensionalen Gegenständen auszuschneiden, unter Voraussetzung, daß die Schablonen als Projektion des Zuschnitts hergestellt werden.

Insbesondere auf automatischen Schneidanlagen kommen diese Vorteile hervorgehoben zur Geltung.

Anhand von Zeichnungen sollen die erfindungsgemäßen Verfahren und die zur Durchführung des Verfahrens nach Anspruch 1 oder 2 notwendige Vorrichtung erläutert werden.

Es zeigt:

Fig. 1 die schematisierte Ansicht des Zuschneidetisches

Fig. 2 die schematisierte Ansicht des Projektionstisches

Fig. 3 die schematisierte Draufsicht des Zuschneidetisches

Fig. 4 die schematisierte Draufsicht des Projektionstisches

Fig. 5 das Schema der Anordnung des Zuschneidetisches, des elektronischen Projektors und des Monitors

Nachfolgend soll hauptsächlich der Zuschnitt von flächigem Material, insbesondere von Tierhäuten beschrieben werden. Der Verfahrensablauf für Schneidgut mit räumlicher Ausdehnung ist jedoch identisch.

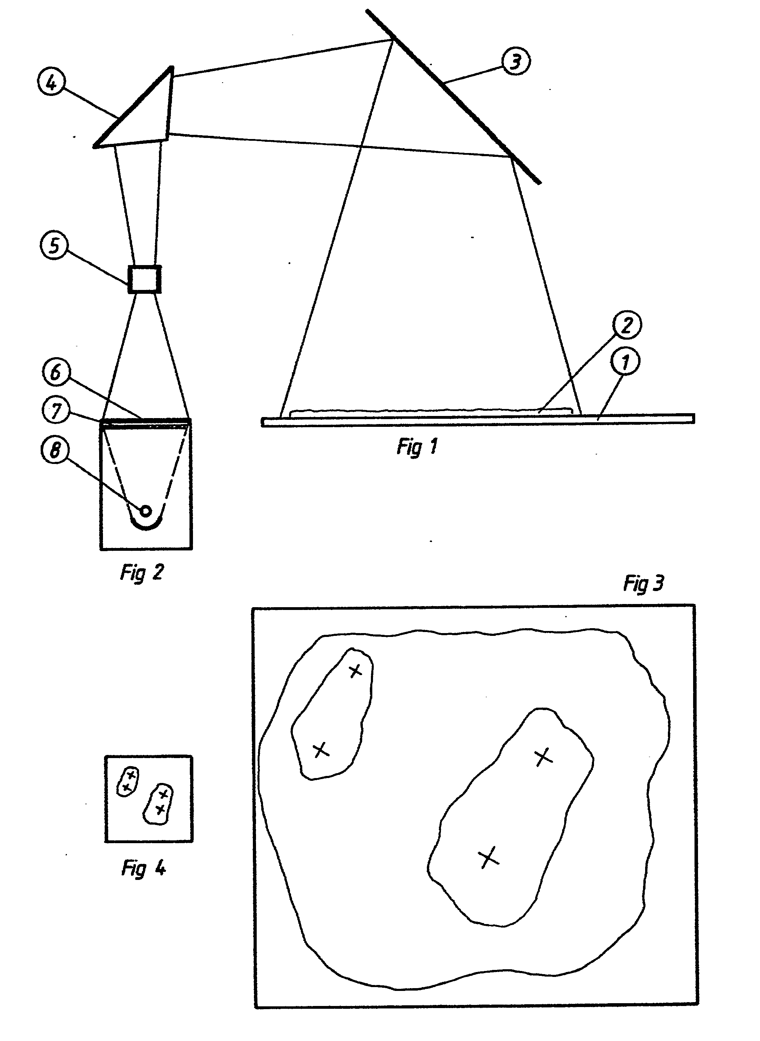

Der Zuschneidetisch nach Fig. 1 besteht im wesentlichen aus einer Palette 1 auf dem die Tierhaut 2 flach ausgebreitet wird und die von einem nicht gezeigten Wechselsystem in den Schneidbereich einer ebenfalls nicht gezeigten Koordinatenschneidmaschine - beispielsweise Messer-, Laser- oder Wasserstrahlschneidanlage - gebracht werden kann. Oberhalb der Palette 1 ist ein Umlenkspiegel 3 angeordnet, der gegen das Dachkantenprisma 4 der Projektionsvorrichtung nach Fig. 2 ausrichtbar ist. Die Projektionsvorrichtung besteht im wesentlichen aus einer Lichtquelle 8, einer darüber angeordneten Fresnellinse 7 der als Auflagefläche dienenden lichtdurchlässigen Digitalisiereinrichtung 6 und dem Objektiv 5. Die Digitalisiereinrichtung 6 ist im Verhältnis 1 : 5 zur Palette 1 verkleinert. Für das zuzuschneidende Material werden Schablonen ebenfalls im Maßstab 1 : 5 hergestellt, die auf der lichtdurchlässigen Digitalisiereinrichtung 6 des Projektionstisches ausgelegt werden. Über das Objektiv 5 und die Umlenkeinrichtungen 4, 3 werden die Schablonen auf die Tierhaut 2 so projiziert, daß die Abbildung der Schablonen auf der Tierhaut 2 in Originalgröße der auszuschneidenden Muster erfolgt (Fig. 3 und 4), was durch eine entsprechende Anordnung des Objektives 5 am Projektionstisch ermöglicht wird. Von Vorteil ist, wenn die Schablonen aus durchscheinendem Material bestehen, weil dann nur deren Konturen auf der Tierhaut 2 abgebildet werden. Durch die Verwendung des Dachkantenprismas 4 ist gewährleistet, daß eine seitenkorrekte Projektion der Schablonen erfolgt, d.h. ein Verschieben auf der Digitalisiereinrichtung 6 bewirkt eine Lageänderung der projizierten Schablonenkontur in dieselbe Richtung.

Die Auswahl der Schablonen und deren Lagepositionierung erfolgt nun entsprechend der Fehlerstellen des Leders 2 bzw. dessen Strukturgegebenheiten und wird manuell von einer Bedienperson vorgenommen.

Nach Auslage der Schablonen werden die Lage und die Kontur jeder einzelnen Schablone über die Digitalisiereinrichtung 6 erfaßt und in einem mit der Digitalisiereinrichtung 6 verbundenen nicht gezeigten Rechenwerk gespeichert. Die Digitalisierungseinrichtung 6 besteht aus einer Glasplatte in die ein Netz von elektrischen Leitern eingebracht ist.

Über eine nicht gezeigte Abtasteinrichtung, beispielsweise einem Griffel, der ein Magnetfeld induziert und über die Glasplatte entlang der ausgelegten Schablonen geführt werden kann, können Feldänderungen auf den Leiterbahnen erfaßt werden. Diese Feldänderungen werden jeweils einem Knotenpunkt zugeordnet, so daß die Schablonenkontur durch eine Schar von x/y-Koordinaten dem Rechenwerk zugeführt wird. Die geforderte Exaktheit der Kontur nach der Digitalisierung bestimmt den Rasterabstand des Leiterbahnennetzes. Der prinzipielle Aufbau einer solche Digitalisiereinrichtung gehört zum Stand der Technik und soll deshalb nicht ausführlicher beschrieben werden. Wichtig ist jedoch, daß die Lichtdurchlässigkeit der Glasplatte sehr hoch gewählt sein muß, um einen hohen Konstrast der projizierten Konturen zu erhalten. Aus den erfaßten Konturen wird im Rechenwerk die Gesamtfläche der aufgelegten Schablonen berechnet und ins Verhältnis zur Fläche der Tierhaut gesetzt. Dieser so ermittelte Ausnutzungsgrad wird in geeigneter Form der Bedienperson mitgeteilt. Die Berechnung der Fläche der Tierhaut kann ebenso wie die der Fläche der Schablonen über eine lichtdurchlässige Digitalisiereinrichtung erfolgen, die auf dem Zuschneidetisch angebracht ist. Was sich aber in den meisten Fällen erübrigen wird, da größtenteils von den Gerbereien die Gesamtfläche bestimmt und auf das Leder aufgeschrieben oder darin eingraviert wurde, so daß der entsprechende Zahlenwert direkt in das Rechenwerk eingegeben werden kann. Für den Fall, daß der sich ergebende Ausnutzungsgrad zu gering, das heißt der Verschnitt zu groß ist, wird erneut mit der Auswahl und Auslage der Schablonen begonnen. Bei einem akzeptablen Ausnutzungsgrad - dessen Wert nicht generell definiert werden kann, sondern abhängig ist von der Qualität der Tierhaut und den Ansprüchen, die an das spätere Fertigteil gestellt werden - erhält die automatische Schneidvorrichtung, die ebenfalls mit dem Rechenwerk verbunden ist, einen manuellen oder automatischen Startbefehl und der Zuschnitt erfolgt selbsttätig entlang der durch die Schablonen vorgegebenenen Schnittlinien mit Hilfe der im Rechenwerk eingespeicherten digitalisierten Daten der Konturen.

Die Steuerung der automatischen Schneidanlage kann durch eine feste Verdrahtung im Rechenwerk oder durch ein geeignetes Rechnerprogramm erfolgen.

Eine weitere Möglichkeit den Zuschnitt zu optimieren besteht darin, die Konturen der auszuschneidenden Muster direkt in das Rechenwerk einzugeben und dort zu speichern, was ebenfalls über eine feste Verdrahtung oder ein entsprechendes Rechenprogramm erfolgen kann.

In diesem Fall müssen die wiederum in einem geeigneten Maßstab verkleinerten Schablonen so kodiert werden, daß sie auf dem Projektionstisch für das Rechenwerk identifizierbar sind und ihre Lage bestimmbar ist. Für die Lagebestimmung reichen zwei an definierter Stelle angeordnete Markierungen aus, die beispielsweise über die lichtdurchlässige Digitalisiereinrichtung 6 erfaßt werden können. Die Identifizierung kann beispielsweise durch eine Strichkodierung erfolgen, die mit einem Lichtgriffel abgefragt wird.

Der Stand der Technik kennt die unterschiedlichsten maschinenlesbaren Kodierungen und deren anschließende Entschlüsselung, die hier Verwendung finden könnten.

Es wäre ebenso denkbar über der Auflagefläche des Projektionstisches eine elektronische Kamera anzuordnen, die mit dem Rechenwerk verbunden ist und die Identifizierung und Lageerkennung der Schablonen vornimmt. Der weitere Verfahrensablauf, von der Lagepositionierung bis zum Zuschnitt entspricht dem zuvor beschriebenen.

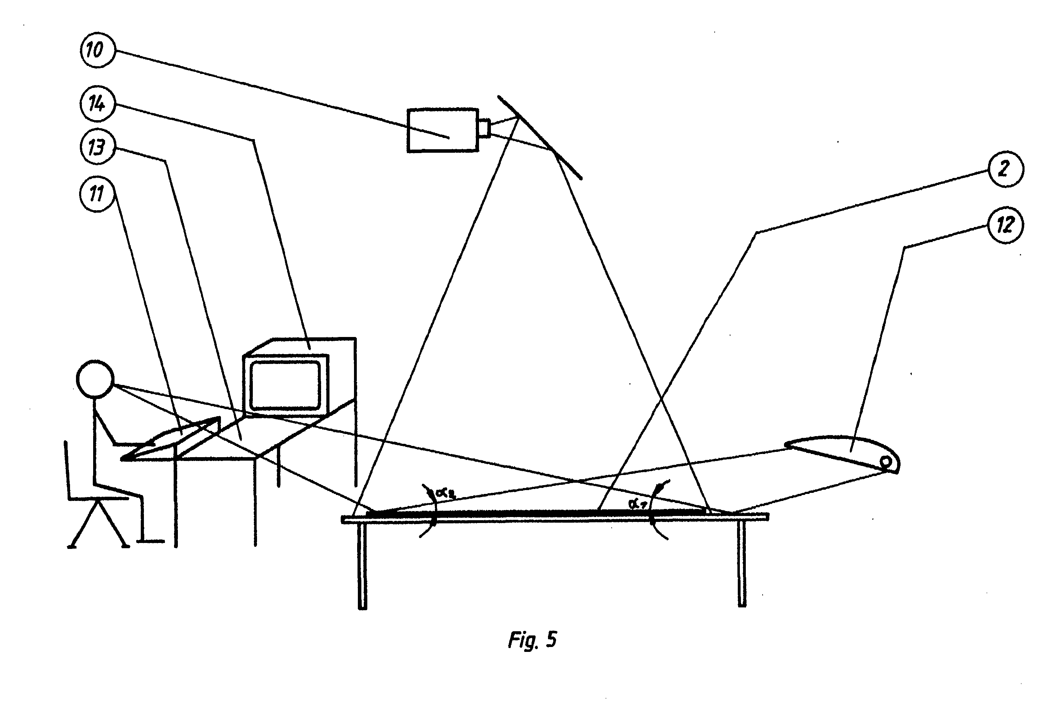

Wenn das Rechenwek mit einem grafikfähigem Monitor 14 und einem lichtstarken elektronischen Projektor 10 - wie er beispielsweise von der Firma Hughes Aircraft unter der Bezeichnung "Graphics-Projektor 700" vertrieben wird, und über eine CNC-Steuerung mit der Schneidanlage (Fig. 5) verbunden ist, kann ein weiteres erfindungsgemäßes Verfahren zur Optimierung eines Materialzuschnitts ausgeführt werden.

In das Rechenwerk werden die einzelenen Konturen der auszuschneidenen Teile eingegeben und gespeichert. Jeder Kontur wird ein bestimmter Kode zugeordnet, so daß sie einzeln abrufbar sind und in allen Kombinationen untereinander auf dem Monitor 14 sichtbar gemacht werden können. Der elektronische Projektor 10 projiziert ein dem Monitorbild identisches Bild und ist so angeordnet, daß diese Projektion in Originalgröße der auszuschneidenden Teile senkrecht auf das auf der Palette 1 befindliche Schneidgut 2 trifft.

Die Bedienperson wählt nun unterschiedliche Konturen aus, die sowohl auf dem Monitor 14 als auch auf dem Schneidgut 2 - hier als Lichtbild - erscheinen. Entsprechend den Fehlerstellen und Strukturgegebenheiten des Schneidgutes 2 werden die einzelnen Konturen mittels einer Abtasteinrichtung 11, beispielsweise einem Joystick oder einer Maus verschoben. Wichtig ist, daß jede Kontur einzeln angesteuert wird und sich die Lage der anderen Konturen dabei nicht verändert. Außerdem muß sichergestellt sein, daß jede angezeigte Kontur für sich gelöscht und durch eine neue ersetzt werden kann, ohne daß die anderen angezeigten Konturen davon beeinflußt werden. Entsprechende Verdrahtungen im Rechenwerk oder geeignete Rechnerprogramme sind bekannt und werden u.a. seit langem bei den sogenannten Telespielen verwendet.

Wenn die optimale Anzahl von Konturen auf dem Monitor 14 bzw. dem Schneidgut 2 positioniert sind, wird deren jeweiliger Kode und Lage dem Rechenwerk mitgeteilt. Es ist auch möglich durch eine geeignete Verdrahtung oder ein entsprechendes Rechnerprogramm das Rechenwerk die Identifizierung und Lageerkennung selbsttätig vornehmen zu lassen. Aus allen Konturen wird die Gesamtfläche des Zuschnitts berechnet und ins Verhältnis zur Fläche des Schneidgutes 2 gesetzt. Der so errechnete Ausnutzungsgrad wird der Bedienperson wiederum in geeigneter Form mitgeteilt und bei einem akzeptablen Wert erhält die nicht gezeigte automatische Schneidanlage, die ebenfalls mit dem Rechenwerk verbunden ist einen Startbefehl und der Zuschnitt erfolgt selbsttätig entlang der zuvor vom Projekor 10 vorgegebenene Schnittlinien. Für den Fall, daß das Rechenwerk selbsttätig die Identifizierung und Lageerkennung der einzelnen Konturen vornimmt, kann in vorteilhafter Weise der Ausnutzungsgrad permanent bestimmt werden und so noch schneller optimiert werden.

Es ist ebenso möglich an Stelle eines lichtstarken elektronischen Projektors 10 ein Laserscanner-System einzusetzen. Dabei kann es wegen der geringen Ablenkgeschwindigkeit des mechanischen Scannersystems notwendig sein, nicht das gesamte Monitorbild abzubilden, sondern nur vom Bediener anwählbare Teilbereiche.

Für die Ausführung aller zuvor beschriebenen erfindungsgemäßen Verfahren ist es vorteilhaft, wenn wie in Fig. 5 gezeigt zusätzlich zu der jeweiligen Projektionseinrichtung seitlich vom Zuschneidetisch, gegenüber dem Bedienerpult 13 ein mit einer Lichtquelle versehener Reflektor 12, dessen Lichtintensität etwa 600 Lumen beträgt, so angeordnet ist, daß das von ihm ausgesandte Licht mit einem Winkel $\alpha_1 < 30°$ auf das zu schneidende Gut 2 trifft und das Bedienerpult 13 so aufgestellt wird, daß der Blickwinkel $\alpha_2$ der Bedienperson auf das zu schneidende Gut 2 etwa dieselbe Größenordnung hat. Durch die seitliche Ausleuchtung werfen z.B. Störstellen in der Oberfläche einer Tierhaut einen Schatten in Richtung des Bedieners. Da die Fläche des Schattens größer als die eigentliche Störstelle ist, wird deren Identifizierung wesentlich erleichtert.

Außerdem hat die Bedienperson einen guten Gesamtüberblick über das Schneidgut 2 und kann in Verbindung mit dem letzteren erfindungsgemäßen Verfahren die Lagepositionierung vornehmen, ohne das Monitorbild zu beobachten.

## Patentansprüche

1. Verfahren zur Optimierung eines Materialzuschnitts, wobei die auszuschneidenden Konturen auf das Schneidgut projiziert werden und der Zuschnitt rechnergesteuert erfolgen kann, dadurch gekennzeichnet, daß

— entsprechend der auszuschneidenden Teile maßstabsgetreu verkleinerte Schablonen angefertigt werden,

— diese auf dem Lichttisch einer Projektionsrichtung ausgelegt und auf das auf dem Schneidtisch angeordnete, zu schneidende Gut so projiziert werden, daß die Schatten- oder Konturenbilder der Schablonen in Originalgröße der auszuschneidenden Teile abgebildet werden, und daraufhin

— die Lagepositionierung der Schablonen manuell, unter Berücksichtigung der Fehlerstellen und Strukturgegebenheiten des zu schneidenden Gutes vorgenommen wird, und

— über eine lichtdurchlässige Digitalisiereinrichtung die Lage und Kontur jeder einzelnen Schablone erfaßt wird,

— aus den Schablonenkonturen die Gesamtfläche des Zuschnitts errechnet und das Verhältnis von Zuschnittsfläche zur Fläche des zu schneidenden Gutes gebildet wird, und bei einem bestimmten Ausnutzungsgrad

— die Schneidvorrichtung einen Startbefehl erhält und den Zuschnitt selbsttätig vornimmt.

2. Verfahren nach Anspruch 1, wobei, anstatt über eine lichtdurchlässige Digitalisiereinrichtung, die Lage und Kontur jeder einzelnen Schablone zu erfassen, die Konturen der auszuschneidenden Teile in einem Rechenwerk gespeichert sind und nur die Lage und Anzahl der Schablonen auf dem Lichttisch erfaßt wird.

3. Verfahren zur Optimierung eines Materialzuschinitts, wobei

– die Konturen der auszuschneidenden Teile in ein Rechenwerk eingegeben und gespeichert werden,

– einzelne Konturen aus dem Rechenwerk abgerufen und auf einem Monitor angezeigt werden,

– über eine mit dem Monitor oder dem Rechenwerk verbundene elektronische Projektionseinrichtung das Monitorbild so auf das auf dem Schneidtisch angeordnete zu schneidende Gut projiziert wird, daß die Konturen in Originalgröße der auszuschneidenden Teile abgebildet werden,

– die unterschiedlichen Konturen mittels eines Joysticks oder einer Maus entsprechend den Fehlerstellen und Strukturgegebenheiten des zu schneidenden Gutes positioniert werden,

– das Rechenwerk jede auf dem Monitor abgebildete Kontur identifiziert und ihre Lage erfaßt oder dies dem Rechenwerk mitgeteilt wird, die Gesamtfläche des Zuschnitts errechnet und ins Verhältnis zur Fläche des zu schneidenden Gutes gesetzt wird, und bei einem bestimmten Ausnutzungsgrad

– die Schneidevorrichtung einen Startbefehl erhält und den Zuschnitt selbsttätig vornimmt.

4. Projektionsvorrichtung zur Ausführung des Verfahrens nach Anspruch 1 oder 2, bestehend aus einem Lichttisch mit einer Lichtquelle (8), einem Linsensystem (7) und einer Auflagefläche (6) sowie einem oder mehreren darüber angeordneten Objektiven (5) und Umlenkeinrichtungen (3, 4), die die von der Lichtquelle (8) erzeugte Strahlung in eine andere Ebene lenken, dadurch gekennzeichnet, daß

– die Auflagefläche (6) durch eine lichtdurchlässige Digitalisiereinrichtung und die Umlenkeinrichtung (4) durch ein Dachkantenprisma gebildet wird.

**Revendications**

1. Procédé pour optimiser une opération de coupe d'une matière, selon lequel sur la matière à découper on projette les contours à former par découpage, l'opération de coupe pouvant être réalisée d'une manière commandée par ordinateur, caractérisé en ce que

– on fabrique des patrons à échelle réduite, en fonction des pièces à former par découpage,

– on place ces patrons sur la table éclairée d'un dispositif de projection et on les projette sur la matière à découper, placée sur la table de découpage, de telle sorte que les images ombrées ou les images des contours des patrons sont formées à la taille originale des pièces à former par découpage, et ensuite

– on réalise manuellement le positionnement des patrons en tenant compte des zones de défauts et des particularités de structure de la matière à découper, et

– on enregistre, au moyen d'un dispositif de numérisation transparent, la position et le contour de chaque patron,

– on calcule, à partir des contours des patrons, la surface totale de la pièce découpée et on forme le rapport de la surface de la pièce découpée à la surface de la matière à découper et, pour un taux d'utilisation déterminé,

– le dispositif de coupe reçoit une instruction de démarrage et réalise automatiquement l'opération de coupe.

2. Procédé selon la revendication 1, selon lequel, à la place de la détermination de la position et du contour de chaque patron au moyen d'un dispositif de numérisation transparent, on mémorise les contours des pièces à former par découpage dans une unité de calcul et on détermine uniquement la position et le nombre des patrons sur la table éclairée.

3. Procédé pour optimiser une opération de coupe d'une matière, selon lequel

– on introduit et on mémorise les contours des pièces à découper dans une unité de calcul,

– on appelle différents contours à partir d'une unité de calcul et on les représente sur un moniteur,

– on projette, au moyen d'un dispositif électronique de projection relié au moniteur ou à l'unité de calcul, l'image du moniteur sur la matière à découper placée sur la table de découpage, de manière à former l'image des contours à la taille originale des pièces à former par découpage,

– on positionne les différents contours à l'aide d'une manette ou d'une souris, en fonction des zones de défauts et des particularités de structure de la matière à découper,

– l'unité de calcul identifie chaque contour dans l'image formée sur le moniteur et détecte sa position, ou bien cette dernière est transmise à l'unité de calcul, la surface totale de la pièce à former par découpage est calculée et le rapport de cette surface à la surface de la matière à découper est établi, et, pour un taux déterminé d'utilisation,

– le dispositif de coupe reçoit une instruction de démarrage et réalise automatiquement l'opération de coupe.

4. Dispositif de projection pour la mise en œuvre du procédé selon la revendication 1 ou 2, constitué par une table éclairée comportant une source de lumière (8), un système de lentilles (7) et une surface d'appui (6) ainsi qu'un ou plusieurs objectifs (5) et dispositifs de renvoi (3, 4), qui sont disposés audessus de cette surface et devient le rayonnement produit par la source de lumière (8) en direction d'un autre plan, caractérisé en ce que

– la surface d'appui (6) est formée par un dispositif de numérisation transparent, et le dispositif de renvoi (4) est formé par un prisme triangulaire.

**Claims**

1. A method for optimising the cutting out of material, wherein the contours to be cut out are projected on to the material to be cut and the cutting out of a shape can take place under computer control, characterised in that

- templates reduced accurately to scale and conforming with the parts to be cut out are prepared,
- these are laid out on the light table of a projection apparatus and so projected on to the material to be cut, arranged on the cutting table, so that the shadow formers or contour formers of the templates are reproduced in original size of the parts to be cut out, and thereupon
- the position of the templates is effected manually, taking consideration of imperfections and structural features of the material to be cut, and the position and contour of each individual template are detected by means of a translucent digitalising device,
- the total area of the cut-out shape or shapes is calculated from the template contours and the ratio of the cut-out shape area to the area of the material to be cut is calculated, and at a specific degree of utilisation
- the cutting device receives a start command and automatically effects the cutting to shape.

2. A method according to claim 1, wherein instead of detecting the position and contour of each individual template by means of a translucent digitalising device, the contours of the parts to be cut out are stored in a computer and only the position and number of the templates on the light table are detected.

3. A method for optimising the cutting out of material, wherein

- the contours of the parts to be cut out are introduced into and stored in a computer,
- individual contours are called out of the computer and displayed on a monitor,
- by way of an electronic projection apparatus connected to the monitor or the computer the monitor image is projected on to the material for cutting, arranged on the cutting table, in such a way that the contours are reproduced in the original size of the parts to be cut out,
- the different contours are positioned by means of a joystick or a mouse in accordance with the imperfections and structural features of the material to be cut,
- the computer identifies each contour reproduced on the monitor and detects its position or this is communicated to the computer, the total area of the cut-out material is calculated and set in proportion to the area of the material to be cut, and at a specific degree of utilisation
- the cutting device receives a start command and automatically effects the cutting to shape.

4. A projection device for carrying out the method according to claim 1 or 2, comprising a light table with a light source (8), a lens system (7) and a support face (6), also one or more objective lenses (5) and deflector devices (3, 4) arranged thereabove, which guide the radiation generated by the light source (8) into another plane, characterised in that

- the support face (6) is formed by a translucent digitalising device and the deflector device (4) is formed by a pentahedral prism.

*Fig 1*

*Fig 2*

*Fig 4*

*Fig 3*

Fig. 5

EP 0 256 386 B1